# EUROPÄISCHE PATENTSCHRIFT

(11) **EP 1 161 359 B1**
(45) Veröffentlichungstag und Bekanntmachung des Hinweises auf die Patenterteilung: **14.07.2004**
(21) Anmeldenummer: 00989813.1
(22) Anmeldetag: 29.11.2000
(51) Int. Cl.: B60R 11/02

(54) **VORRICHTUNG ZUR HALTERUNG UND KONTAKTIERUNG EINES FUNKTELEFONS**
DEVICE FOR HOLDING AND CONTACTING A RADIOTELEPHONE
DISPOSITIF DE FIXATION ET DE CONNEXION D'UN RADIOTELEPHONE

(30) Priorität: 12.01.2000 DE 10001011
(43) Veröffentlichungstag der Anmeldung: 12.12.2001
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Otten, Herbert
(86) Internationale Anmeldenummer: PCT/DE2000/004253
(87) Internationale Veröffentlichungsnummer: WO 2001/051315

(56) Entgegenhaltungen:
- DE-A- 4 107 996
- DE-A- 19 755 621
- DE-U- 29 821 166
- GB-A- 2 261 571
- PATENT ABSTRACTS OF JAPAN vol. 018, no. 083 (M-1558), 10. Februar 1994 (1994-02-10) & JP 05 294190 A (MATSUSHITA ELECTRIC IND CO LTD), 9. November 1993 (1993-11-09)
- PATENT ABSTRACTS OF JAPAN vol. 1999, no. 13, 30. November 1999 (1999-11-30) & JP 11 220520 A (HARNESS SYST TECH RES LTD;SUMITOMO WIRING SYST LTD; SUMITOMO ELECTRIC), 10. August 1999 (1999-08-10)

## Beschreibung

Die Erfindung betrifft eine Vorrichtung nach dem Oberbegriff des Patentanspruchs 1.

Derartige Vorrichtungen beipielsweise bekannt aus DE 197 55 621 A1) kommen zum Einsatz, um ein Funktelefon sicher zu halten und elektrisch mit im Fahrzeug eingebauten Komponenten, wie z. B. Freisprecheinrichtungen, Displays und Fahrzeugaußenantennen, zu verbinden.

Eine derartige Aufnahmevorrichtung ist beispielsweise aus der DE 197 55 621 A1 bekannt. Bei dieser Haltevorrichtung wird ein Handy auf Steckkontakte aufgesteckt, die an einer Blende über ein Scharnier an einem Schlitten angelenkt sind. Zur Aufnahme des Handys in einem Schacht wird das Handy auf den Schlitten geschwenkt, durch ein Wandelement in dieser Position geklemmt und dann in Längsrichtung des Schlittens in den Schacht eingefahren. Zur Entnahme des Handys wird die Blende mit dem Handy verschwenkt und das Handy von den Steckkontakten abgezogen.

Nachteilig am Stand der Technik ist, dass die Steckkontakte der Haltevorrichtung beim Aufstecken bzw. Abziehen des Handys nur einen begrenzten Gegendruck ausüben können, da Kräfte nur über Blende, Scharnier und Schlitten auf den Schacht abgeleitet werden können. Weiterhin ist es mit der Haltevorrichtung nicht möglich, Handys unterschiedlicher Größe sicher zu halten, da die Haltevorrichtung, welche das Handy kraftschlüssig hält, auf eine vorgegebene Handygröße abgestimmt ist.

Aufgabe der Erfindung ist es, eine Vorrichtung zu schaffen, die den Einsatz von Funktelefonen unterschiedlichster Abmessungen erlaubt, die beim Aufsetzen und Abnehmen des Funktelefons nicht ausweicht und das Funktelefon zum Aufsetzen und zur Entnahme in eine für den Nutzer ergonomisch optimale Position bringt.

Diese Aufgabe wird in Verbindung mit dem Oberbegriff des Patentanspruchs 1 erfindungsgemäß durch die kennzeichnenden Merkmale des Patentanspruchs 1 gelöst.

Die erfindungsgemäße Vorrichtung umfaßt eine Halterung, welche auf die Gehäuselängsabmessung des Funktelefons anpassbar ist. Diese Anpassung erfolgt durch eine Längsverschiebung der Gegenkontakteinheit, mit der das Funktelefon verbunden ist. Durch diese Anpassungsmöglichkeiten ist eine Halterung für Funktelefone verwirklicht, welche die Aufnahme von Funktelefonen unterschiedlicher Längenabmessung erlaubt, ohne dass die Halterung in irgend einer Form durch Austausch von Bauteilen oder Zusatzbauteile abgeändert werden muss. Dies bedeutet im Hinblick auf den Einsatz der Halterung in Kraftfahrzeugen, dass die vorhandene Halterung von jedem Nutzer eingesetzt werden kann, der ein Funktelefon besitzt, das eine bestimmte Kontakteinheit aufweist. Hierbei ist es unerheblich, ob sich die verschiedenen Funktelefone in ihren Abmessungen, insbesondere in ihren Längsabmessungen gleichen.

Der Einsatz von Funktelefonen unterschiedlicher Gehäusebreite und/oder Gehäusedicke wird dadurch gewährleistet, dass die Gegenkontakteinheit im Bereich der Kontaktmittel nur in einem Bereich, der außerhalb der üblichen Funktelefonabmessungen liegt, Erhebungen aufweist. Hierdurch ist eine Halterung mit einem Aufnahmetisch bzw. Aufnahmebereich ausgebildet, der völlig unabhängig von Gehäuseabmessungen ist. Somit benötigt das einzusetzende Funktelefon lediglich eine passende Kontakteinheit. Der Einsatz eines nachträglich gekauften dicken Akkus, der das Funktelefon an der Rückseite dicker macht, bedingt somit keine Anpassung der Halterung.

Eine ergonomische Aufnahmestellung/Abgabestellung für das Funktelefon wird dadurch erreicht, dass die Gegenkontakteinheit in dieser Stellung um 45° bis 135° gegenüber der Hauptebene der Halterung verschwenkt ist. Somit kann das Funktelefon durch eine einfache Aufsetzbewegung, bei welcher der Nutzer bei gleichbleibender Handstellung lediglich den Unterarm absenken muss, mit der Halterung gekuppelt werden.

Auch das Verbringen des Funktelefons aus der Aufnahmestellung/Abgabestellung in eine Arbeitsstellung erfolgt durch eine fließende Handbewegung. Hierbei wird das Funktelefon zur Halterung hin abgekippt und durch eine Kippschiebebewegung in die Halterung eingefahren. Die abschließend erforderliche Rückschiebebewegung, durch die das Funktelefon mit einem Kopfende unter ein Rückhalteelement gefördert wird, muss nicht vom Nutzer ausgeführt werden. Diese Bewegung wird durch eine Feder ausgeführt, die durch die Dreh- und Schiebebewegung vorgespannt ist.

Die beim Aufstecken des Funktelefons auf die Gegenkontakteinheit bzw. auf die Kontaktmittel aufgebrachte Kraft wird optimal in die Halterung eingeleitet, da die insbesondere als Stecker ausgeführten Kontaktmittel senkrecht zur Drehachse der Gegenkontakteinheit ausgerichtet sind. Somit bewirkt ein Druck auf die Kontaktmittel kein Moment um die Drehachse und die Druckkraft wird ohne die Möglichkeit einer Ausweichbewegung von der Halterung aufgenommen.

Mit Hilfe mindestens eines Federelements wird die Gegenkontakteinheit immer zur Aufnahme-/Abgabestellung hin gezogen, so dass die Lage des Kontaktmittels sich immer in der selben Position befindet. Der Nutzer ist somit in der Lage durch eine routinemäßige Handbewegung das Funktelefon zu kuppeln.

Ein gedämpftes, schonendes Ausfahren des Funktelefons aus der Arbeitsstellung in die Aufnahme-/Abgabestellung ist durch ein wenigstens Bereichsweise wirkendes Bremselement gewährleistet. Dieses Bremselement bremst die Schiebeund/oder die Drehbewegung der Gegenkontakteinheit.

Im Kopfbereich der Halterung erfolgt die Arretierung des Funktelefons in der Arbeitsstellung. Durch ein Rückhalteelement, das den Kopfbereich des Funktelefons übergreift, wird verhindert, dass das Funktelefon von der Gegenkontakteinheit aus der Arbeitsstellung gedrückt wird. Weiterhin sind im Aufnahmebereich der Halterung Niveauausgleichselemente angeordnet, die gegen die Rückseite des Funktelefons drücken. Durch das Zusammenwirken der Niveauausgleichselemente und des Rückhalteelements wir das Funktelefon unabhängig von der Gehäusedicke spielfrei im Kopfbereich der Halterung aufgenommen.

Beim Einfahren des Funktelefons in die Arbeitsstellung wird weiterhin ein Auswerfer vorgespannt, der auf die Rückseite und/oder die Kopfseite des Funktelefons wirkt. Durch diesen Auswerfer wird bewirkt, dass das Funktelefon bei der Freigabe durch das Rückhalteelement mit dem Kopfbereich aus dem Aufnahmebereich der Halterung gehoben wird. Somit ist wirksam verhindert, dass das Funktelefon durch die auf den Längsschlitten und oder die Kontaktierungseinheit wirkende Federkraft in der Aufnahme eingeklemmt wird.

Schließlich ist es vorteilhaft, die Kontaktmittel beispielsweise in einer zur Kontaktierungsrichtung senkrecht stehenden Ebene schwimmend zu Lagern. Durch diese Maßnahme ist gewährleistet, dass ein mit der Kontakteinheit leicht verkantet aufgesetztes Funktelefon die Gegenkontakteinheit nicht beschädigt.

Weiter Einzelheiten der Erfindung werden in der Zeichnung anhand von schematisch dargestellten Ausführungsbeispielen beschrieben.

Hierbei zeigt:
- Fig. 1: eine Seitenansicht eines Funktelefons;
- Fig. 2: eine Draufsicht auf die Halterung;
- Fig. 3: einen Querschnitt durch die Halterung entlang der in Figur 2 dargestellten Schnittlinie III-III;
- Fig. 4: einen Längsschnitt durch die Halterung entlang der in Figur 2 dargestellten Schnittlinie IV-IV;
- Fig. 5: eine Seitenansicht einer alternativen Gegenkontakteinheit mit zwei Kontakteinheiten zweier unterschiedlicher Funktelefone;
- Fig. 6: eine Schnitt durch die in Figur 5 dargestellte alternative

Gegenkontakteinheit entlang der Schnittlinie VI-VI und zwei Kontakteinheiten zweier unterschiedlicher Funktelefone.

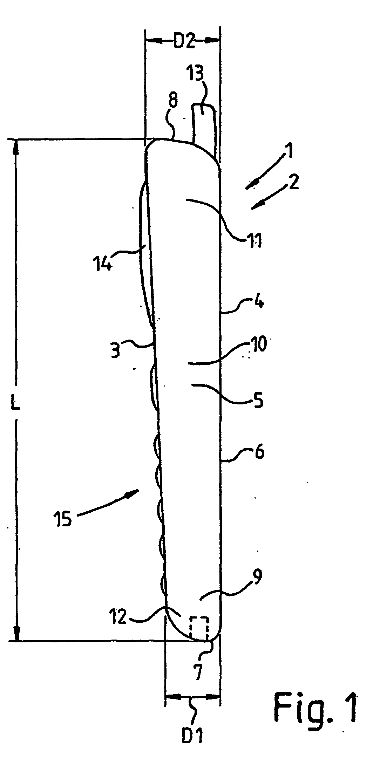

Figur 1 zeigt ein Funktelefon 1 mit einem Gehäuse 2. Das Gehäuse 2 des Funktelefons 1 weist eine Frontseite 3, eine Rückseite 4, Seitenflächen 5, 6, eine Fußseite 7 und eine Kopfseite 8 auf. Weiterhin zeigt das Funktelefon 1 einen Fußbereich 9 einen Mittelbereich 10 und einen Kopfbereich 11 auf. Der Fußbereich 9 wird durch eine Kontakteinheit 12 abgeschlossen. Im Kopfbereich 11 ist eine Antenne 13 und ein Display 14 angeordnet. Der Fuß- und der Mittelbereich 9, 10 weisen auf der Frontseite 3 eine Tastatur 15 auf. Das Funktelefon 1 besitzt im Fußbereich 9 eine Dicke D1, im Kopfbereich 11 eine Dicke D2 und eine Längsabmessung L.

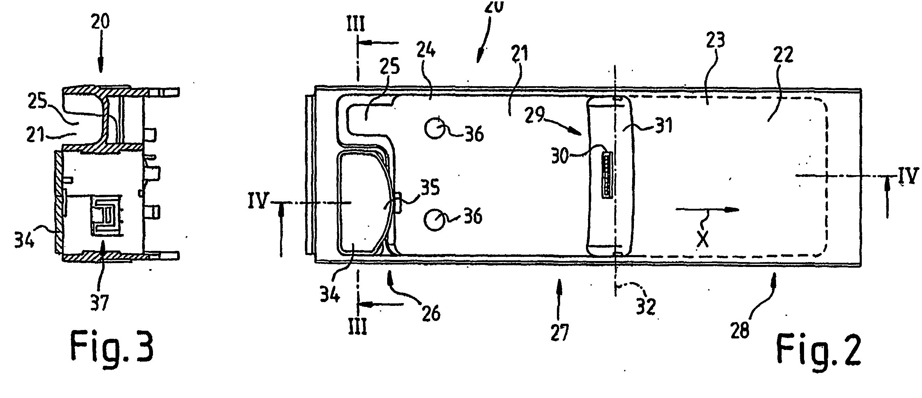

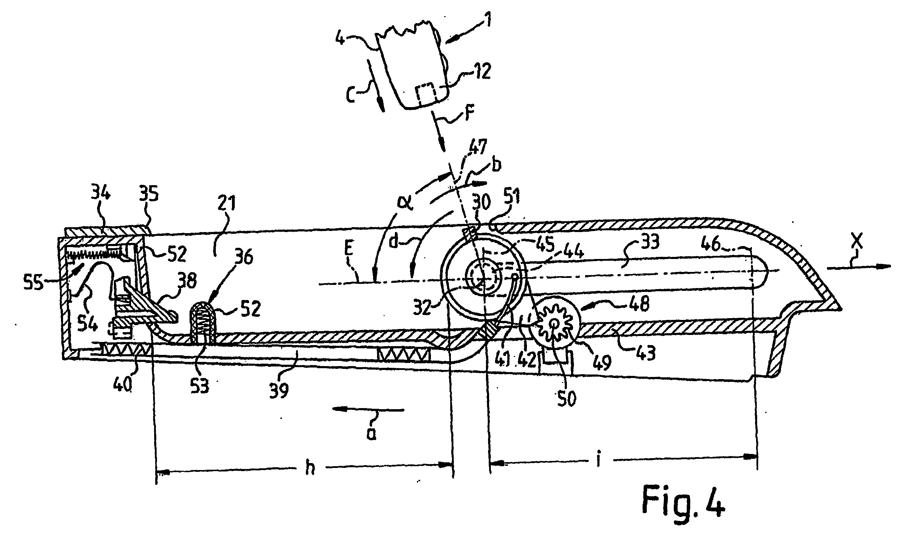

In Figur 2 ist eine Halterung 20 dargestellt. Diese zeigt eine Aufnahme 21, die sich unter einer Decke 22 in einen Schacht 23 erstreckt. Die Aufnahme 21 besitzt eine Kontur 24 (teilweise gestrichelt dargestellt), die im Wesentlichen dem Schattenwurf eines Funktelefons entspricht. Ein Bereich 25 ist hierbei einer Antenne eines Funktelefons zuzuordnen. Die Halterung 20 ist grob in einen Kopfbereich 26, einen Mittelbereich 27 und einen Fußbereich 28 unterteilt. Im Mittelbereich 27, in dem die Aufnahme 21 in den Schacht 23 übergeht, ist eine Gegenkontakteinheit 29 angeordnet. Diese setzt sich im Wesentlichen aus Kontaktmitteln 30 und einem walzenartigen Grundkörper 31 zusammen. Die Gegenkontakteinheit 29 ist um eine Drehachse 32 schwenkbar gelagert. Weiterhin ist die Gegenkontakteinheit 29 in Pfeilrichtung x entlang von Führungen 33 (siehe Figur 4) in den Schacht 23 verschiebbar. Im Kopfbereich 26 der Halterung 20 ist ein Rückhalteelement 34 angeordnet, das die Aufnahme 21 mit einem Abschnitt 35 (siehe auch Figur 4) überdeckt. Im Übergang vom Kopfbereich 26 in den Mittelbereich 27 sind in der Aufnahme 21 Niveauausgleichselemente 36 angeordnet.

Figur 3 zeigt einen Schnitt durch die in Figur 2 dargestellte Halterung 20 entlang der Schnittlinie III-III. Unterhalb des Rückhalteelements 34 ist eine Führung 37 für einen in Figur 4 dargestellten Auswerfer 38 dargestellt.

Figur 4 zeigt einen Längsschnitt durch die in Figur 2 dargestellte Halterung 20 entlang der Schnittlinie IV-IV. Unterhalb der Aufnahme 21 ist ein Kanal 39 angeordnet, in dem eine abschnittsweise symbolisch dargestellte Feder 40 verläuft. Der Kanal 39 mündet im Mittelbereich 27 der Halterung 20 in die Aufnahme 21. Über ein flexibles Element 41 ist die Feder 40 mit dem Grundkörper 31 der Gegenkontakteinheit 29 verbunden. Durch die in Pfeilrichtung a wirkende Rückstellkraft der Feder 40 wird die Gegenkontakteinheit 29 in Pfeilrichtung b gedreht. Die Drehung der Gegenkontakteinheit 29 wird durch einen an dem Grundkörper 31 angeformten Nocken 42 begrenzt, der an einer die Aufnahme 21 begrenzenden Wandung 43 anstößt. Somit ist der Winkel α, um den die Kontaktmittel 30 bzw. die Gegenkontakteinheit 29 zu eine Hauptebene E der Halterung 20 verdrehbar sind auf etwa 75° festgelegt. Die Gegenkontakteinheit 29 ist auf einer Achse 44 um die Drehachse 32 drehbar. Die Achse 44 ist von einer ersten Position 45 in eine zweite Position 46 in Pfeilrichtung x entlang der Führungen 33 verschiebbar.

In Figur 4 befindet sich die Gegenkontakteinheit 29 in einer Aufnahme- bzw. Abgabeposition 47 für das Funktelefon 1. In dieser Aufnahmeposition 47 wird das Funktelefon 1 in Pfeilrichtung c auf die Gegenkontakteinheit 29 gesteckt. Hierbei wird das Funktelefon 1 mit der Kontakteinheit 12 auf die Kontaktmittel 30 geführt und aufgedrückt. Beim Aufdrücken wirkt das Funktelefon 1 mit einer Kraft F auf die Gegenkontakteinheit 29. Von dieser wird die eingeleitete Kraft F über die Achse 44 auf die Halterung 20 übertragen. Die Halterung 20 stützt sich wiederum an einer nicht dargestellten Konsole ab. Da die Kraft F senkrecht auf die Drehachse 32 wirkt wird kein Moment erzeugt, das die Gegenkontakteinheit 29 zu einer Drehung um die Drehachse 32 veranlaßt. Ein Weggleiten der Gegenkontakteinheit 29 in den Führungen 33 ist dadurch verhindert, dass eine Bremse 48 so ausgebildet ist, dass zunächst eine Drehbewegung der Gegenkontakteinheit 29 erfolgen muß. Die Bremse 48 besitzt ein Zahnrad 49, das um eine Achse 50 drehbar ist. Die Drehbarkeit des Zahnrads 49 ist leicht erschwert. Auf dem Nocken 42 der Gegenkontakteinheit 29 ist eine nicht dargestellte Verzahnung angeordnet, auf der sich das Zahnrad 49 bei einer Drehung der Gegenkontakteinheit 29 abwälzt.

Aus der Aufnahmeposition 47, in der das Funktelefon 1 auf die Gegenkontakteinheit 29 aufgesteckt ist, wird die Gegenkontakteinheit 29 gemeinsam mit dem Funktelefon 1 in Pfeilrichtung d verschwenkt. Dieser Drehbewegung folgt spätestens dann eine Dreh-Schiebebewegung, wenn das Funktelefon 1 mit seiner Rückseite 4 am Abschnitt 35 des Rückhalteelements 34 anliegt. Diese kombinierte Dreh-Schiebbewegung kann anderseits frühestens dann einsetzen, wenn zwischen der Frontseite 3 des Funktelefons 1 und einer Kante 51 der Decke 22 durch die Drehbewegung eine Abstand entstanden ist, der eine Verschiebung der Funktelefons 1 in Pfeilrichtung x erlaubt. Inwieweit eine Schiebebewegung in Richtung des Pfeils x erforderlich ist, ist von der Längsabmessung L des Funktelefons 1 abhängig. Die in Figur 4 dargestellte Halterung 20 ist für die Aufnahme eines Funktelefons 1 geeignet, das mindestens eine Längenabmessung L besitzt, die einem Abstand h zwischen dem Grundkörper 31 und einer Wandung 52 der Aufnahme 21 entspricht. Durch Verfahren der Gegenkontakteinheit 29 in den Führungen 33 in Pfeilrichtung x ist es möglich ein Funktelefon 1 mit einer Längenabmessung L aufzunehmen, die etwas kleiner als die Summe der Abstände h und i ist. Hierbei ist i das Maß für den maximalen Verfahrweg der Gegenkontakteinheit 29 in Pfeilrichtung x. Die Dreh-Schiebebewegung des Funktelefons 1 und der Gegenkontakteinheit 29 wird fortgesetzt bis das Funktelefon 1 etwa parallel zur Hauptebene E zu liegen kommt. Danach folgt eine Rückschiebebewegung des Funktelefons 1 und der Gegenkontakteinheit 29 in Pfeilrichtung a. Diese Rückschiebbewegung wird von der Feder 40 ausgeführt, die durch den Dreh-Schiebevorgang gespannt wurde. Durch diese Rückschiebewegung kommt das Funktelefon 1 mit seinem Kopfbereich 11 in Hintergriff zum Rückhalteelement 34 und hat eine Arbeitsposition erreicht. In dieser Arbeitsposition ist das Funktelefon 1 vollständig von der Aufnahme 21 aufgenommen und wird zwischen dem Rückhalteelement 34 und dem Niveauausgleichselement 36 spielfrei gehalten. Das Niveauausgleichselement 36 besteht aus einer elastischen Kappe 52, die eine Feder 53 aufnimmt. Durch das Niveauausgleichselement 36 wird ein Ausgleich für Funktelefone 1 unterschiedlicher Dicke D2 geschaffen. Weiterhin wird durch die Rückschiebebewegung eine Blattfeder 54 vorgespannt, mit welcher der Auswerfer 38 verbunden ist.

Eine Bewegung des Funktelefons 1 aus dieser Arbeitsposition in die Abgabeposition 47 ist durch ein Rückschieben des durch einen Federmechanismus 55 in Pfeilrichtung x vorgespannten Rückhalteelements 34 auslösbar. Durch den Auswerfer 38 und die vorgespannte Feder 40 wird eine Drehung des Funktelefons 1 und der Gegenkontakteinheit 29 in Pfeilrichtung b bewirkt. Diese wird sobald der Kopfbereich 11 des Funktelefons 1 oberhalb des Rückhalteelements 34 liegt durch eine Schiebebewegung in Pfeilrichtung a überlagert, solange die Gegenkontakteinheit 29 noch nicht in der Position 45 steht. Bei der abschließenden Drehbewegung des Funktelefons 1 und der Gegenkontakteinheit 29 ist die Bremse 48 aktiv und bewirkt, dass die Abgabeposition 47 weich angefahren wird. In der Abgabeposition 47 ist eine Abnahme des Funktelefons 1 von der Gegenkontakteinheit 29 oder ein erneutes Verbringen des Funktelefons 1 in die Arbeitsposition möglich.

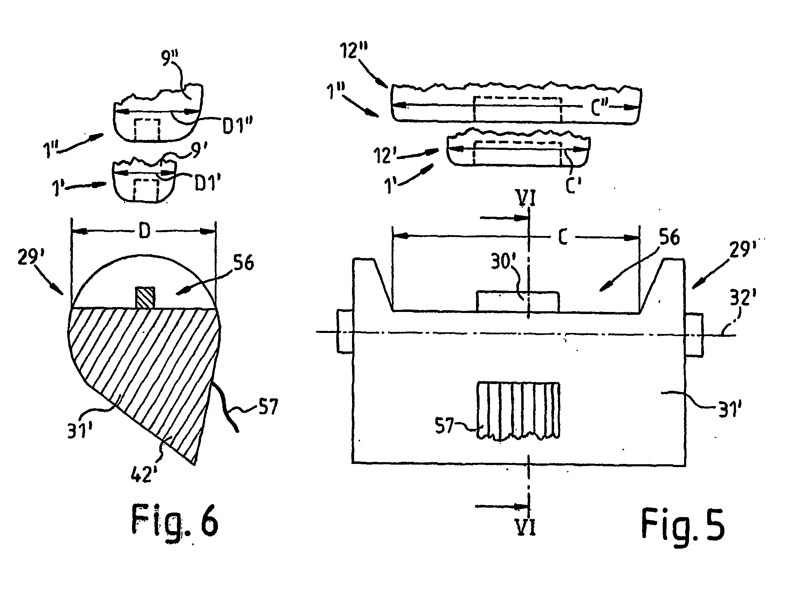

Figur 5 zeigt eine Seitenansicht einer alternativen Gegenkontakteinheit 29'. Oberhalb der Gegenkontakteinheit 29' sind schematisch Kontakteeinheiten 12', 12'' von Funktelefonen 1', 1'' dargestellt. Die Gegenkontakteinheit 29' besitzt einen Grundkörper 31', der um eine Drehachse 32' drehbar ist. Der Grundkörper 31' weist eine Abflachung 56 auf, auf der Kontaktmittel 30' angeordnet sind. Die. Kontaktmittel 30' sind über ein Flachbandkabel 57, das teilweise im Grundkörper 31' verläuft, mit nicht dargestellten Bauteilen wie zum Beispiel Mikrofon, Lautsprecher und Antenne verbunden. Gemäß einer nicht dargestellten Ausführungsvariante ist auch eine Verbindung über ein Koaxialkabel vorgesehen. Die Abflachung 56 weist eine Breite C auf, die es erlaubt, Funktelefone 1', 1'' mit unterschiedlicher Breite C', C'' auf die Kontaktmittel 30' aufzusetzen. Wobei die Kontakteeinheiten 12', 12" der Funktelefone 1', 1'' die Kontaktmittel 30' der Gegenkontakteinheit 29' umgreifen und aufnehmen.

In Figur 6 ist ein Schnitt durch die Gegenkontakteinheit 29' entlang der in Figur 5 dargestellten Schnittlinie VI-VI gezeigt. Im Schnitt wird deutlich, dass die Gegenkontakteinheit 29' einen Nocken 42' aufweist, der zur Drehbegrenzung der Gegenkontakteinheit 29' dient (siehe Beschreibung zu Figur 4). Die Abflachung 56 der Gegenkontakteinheit 29' besitzt eine Dicke D, die ein Kontaktieren von Funktelefonen 1', 1'' mit Fußbereichen 9', 9'' unterschiedlicher Dicke D1', D1'' erlaubt.

Die Erfindung ist nicht auf dargestellte oder beschriebene Ausführungsbeispiele beschränkt. Sie umfaßt vielmehr Weiterbildungen der Erfindung im Rahmen der Schutzrechtsansprüche. Insbesondere sieht die Erfindung auch Verbindungen zwischen der Kontakteinheit des Funktelefons und der Gegenkontakteeinheit vor, die rein mechanisch sind, hierbei sind insbesondere formschlüssige und/oder kraftschlüssige Verbindungen vorgesehen. Eine kraftschlüssige Verbindung kann beispielsweise durch Magnete verwirklicht sein.

### Bezugszeichenliste:

| | | |
|---|---|---|
| 1, 1', 1'' | Funktelefon | |
| 2 | Gehäuse | |
| 3 | Frontseite | |
| 4 | Rückseite | |
| 5, 6 | Seitenfläche | |
| 7 | Fußseite | |
| 8 | Kopfseite | |
| 9, 9',9'' | Fußbereich | |
| | 10 | Mittelbereich |
| | 11 | Kopfbereich |
| | 12, 12', 12'' | Kontakteinheit |
| | 13 | Antenne |
| | 14 | Display |
| | 15 | Tastatur |
| | 20 | Halterung |
| | 21 | Aufnahme |
| | 22 | Decke |
| | 23 | Schacht |
| | 24 | Kontur |
| | 25 | Bereich |
| | 26 | Kopfbereich |
| | 27 | Mittelbereich |
| | 28 | Fußbereich |
| | 29, 29' | Gegenkontakteinheit |
| | 30, 30' | Kontaktmittel |
| | 31, 31' | Grundkörper |
| | 32, 32' | Drehachse |
| | 33 | Führung |
| | 34 | Rückhalteelement |
| | 35 | Abschnitt |
| | 36 | Niveauausgleichselement |
| | 37 | Führung |
| | 38 | Auswerfer |
| | 39 | Kanal |
| | 40 | Feder |
| | 41 | Element |
| | 42, 42' | Nocken |
| | 43 | Wandung |
| | 44 | Achse |
| | 45 | Position |
| | 46 | Position |
| | 47 | Aufnahme-/Abgabeposition |
| | 48 | Bremse |
| | 49 | Zahnrad |
| | 50 | Achse |
| | 51 | Kante |
| | 52 | Kappe |
| | 53 | Feder |
| | 54 | Blattfeder |
| | 55 | Federmechanismus |
| | 56 | Abflachung |
| | 57 | Flachbandkabel |

## Patentansprüche

1. Vorrichtung zur Halterung und Kontaktierung eines Funktelefons (1, 1', 1"), mit einem länglichen, quaderförmigen Gehäuse (2) mit einer, an einem stirnseitigen Gehäuseende (7) liegenden Kontakteinheit (12, 12', 12"), welche Kontaktierungs- und/oder Verbindungselemente aufweist, wobei die Kontakteinheit (12, 12', 12") des Funktelefons (1, 1', 1") mit einer schwenkbaren Gegenkontakteinheit (29, 29') einer Halterung (20) für das Funktelefon (1, 1', 1") zusammenwirkt und wobei das Funktelefon (1, 1', 1") mit seiner Kontakteinheit (12, 12', 12") auf die Gegenkontakteinheit (29, 29') der Halterung aufsetzbar und/oder aufsteckbar und mit dieser um einen Schwenkwinkel verschwenkbar ist, **dadurch gekennzeichnet, dass** eine Anpassung der Halterung (20) auf die Gehäuselängsabmessung (L) des Funktelefons (1, 1', 1'') mittels einer Längsverschiebung der Gegenkontakteinheit (29, 29') innerhalb der Halterung (20) erfolgt.

2. Vorrichtung nach Anspruch 1, **dadurch gekennzeichnet, dass** die Gegenkontakteinheit (29, 29') Kontaktmittel (30, 30') aufweist, in deren Bereich Raum für Funktelefone (1, 1', 1'') unterschiedlicher Gehäusebreite (C', C'') und/oder Gehäusedicke (D1, D1', D1'') vorgesehen ist.

3. Vorrichtung nach einem der vorhergehenden Ansprüche, dass die Gegenkontakteinheit (29, 29') in einer Aufnahme-/Abgabeposition (47) für das Funktelefon (1, 1', 1'') mit einem Kontaktmittel (30, 30') etwa 45° bis 135° verschwenkt zur Hauptebene (E) der Halterung (20) steht.

4. Vorrichtung nach einem der vorhergehenden Ansprüche, **dadurch gekennzeichnet, dass** das Funktelefon (1, 1', 1'') aus der Aufnahmeposition (47) über eine Drehbewegung, eine daran anschließende Dreh-Schiebebewegung und eine abschließende Rückschiebebewegung in der Halterung (20) in eine Arbeitsstellung bringbar ist.

5. Vorrichtung nach einem der vorhergehenden Ansprüche, **dadurch gekennzeichnet, dass** die Gegenkontakteinheit (29, 29') im Wesentlichen aus einem Grundkörper (31, 31') besteht, der zu seiner Drehachse (32, 32') senkrecht ausgerichtete-Kontaktmittel (30, 30') trägt.

6. Vorrichtung nach einem der vorhergehenden Ansprüche, **dadurch gekennzeichnet, dass** die Gegenkontakteinheit (29, 29') durch eine Feder (40) in der Aufnahme- bzw. Abgabeposition (47) gehalten ist, wobei die Feder (40) der Drehbewegung und der Schiebebewegung der Gegenkontakteinheit (29, 29') entgegenwirkt.

7. Vorrichtung nach einem der vorhergehenden Ansprüche, **dadurch gekennzeichnet, dass** die Bewegung der Gegenkontakteinheit (29, 29') wenigstens bereichsweise durch eine Bremse (48) gedämpft ist.

8. Vorrichtung nach einem der vorhergehenden Ansprüche, **dadurch gekennzeichnet, dass** das der Kontakteinheit (12, 12', 12'') gegenüberliegendes stirnseitiges Gehäuseende (8) des Funktelefons (1, 1', 1'') in der Arbeitsstellung von einem Rückhalteelement (34) übergriffen ist.

9. Vorrichtung nach einem der vorhergehenden Ansprüche, **dadurch gekennzeichnet, dass** das Funktelefon (1, 1', 1'') in der Arbeitsstellung auf einer Rückseite (4) durch mindestens ein Niveauausgleichselement (36) beaufschlagt ist.

10. Vorrichtung nach einem der vorhergehenden Ansprüche, **dadurch gekennzeichnet, dass** das Funktelefon (1, 1', 1'') in der Arbeitsstellung einen Auswerfer (38) in einer vorgespannten Position hält.

11. Vorrichtung nach einem der vorhergehenden Ansprüche, **dadurch gekennzeichnet, dass** die Kontaktmittel (30, 30') der Gegenkontakteinheit (29, 29') vorzugsweise mindestens in einer parallel zu einer Abflachung (5) der Gegenkontakteinheit (29, 29') liegenden Ebene schwimmend gelagert sind.

12. Vorrichtung nach einem der vorhergehenden Ansprüche, **dadurch gekennzeichnet, dass** das Federelement (40) nach dem Lösen des Rückhalteelements (34) ein Verfahren des Funktelefons (1, 1', 1'') aus der Arbeitsstellung in die Aufnahme-/Abgabeposition (47) bewirkt.

## Claims

1. A device for holding and contacting a radio telephone (1, 1', 1"), having an oblong, parallepiped-shaped housing (2) with a contact unit (12, 12', 12") situated on a front housing end (7), which comprises contacting and/or connection elements, the contact unit (12, 12', 12") of the radio telephone (1, 1', 1") interacting with a pivoting counter-contact unit (29, 29') of a holder (20) for the radio telephone (1, 1', 1") and it being possible to place and/or plug in the radio telephone (1, 1', 1") with its contact unit (12, 12', 12") on the counter-contact unit (29, 29') of the holder and it to be pivoted with this around a pivot angle,
**characterised in that** an adaptation of the holder (20) to the longitudinal dimension of the housing (L) of the radio telephone (1, 1', 1") takes place by means of a longitudinal displacement of the counter-contact unit (29, 29') inside the holder (20).

2. A device according to Claim 1,
**characterised in that** the counter-contact unit (29, 29') comprises contact means (30, 30'), in the region of which space is provided for radio telephones (1, 1', 1") of different housing width (C', C") and/or housing thickness (D1, D1', D1").

3. A device according to one of the preceding Claims,
**characterised in that** the counter-contact unit (29, 29') is situated in a housing/delivery position (47) for the radio telephone (1, 1', 1") with a contact means (30, 30') pivoted roughly 45° to 135° to main plane (E) of the holder (20).

4. A device according to one of the preceding Claims,
**characterised in that** the radio telephone (1, 1', 1") can be moved out of the housing position (47) into an operating position via a rotational movement, a rotational-pushing movement following this and a final pushing-back movement in the holder (20).

5. A device according to one of the preceding Claims,
**characterised in that** the counter-contact unit (29, 29') consists substantially of a basic member (31, 31'), which bears contact means (30, 30') aligned perpendicularly to its axis of rotation (32, 32').

6. A device according to one of the preceding Claims,
**characterised in that** the counter-contact unit (29, 29') is retained by a spring (40) in the housing or delivery position (47), the spring (40) acting against the rotational movement and the pushing movement of the counter-contact unit (29, 29').

7. A device according to one of the preceding Claims,
**characterised in that** the movement of the counter-contact unit (29, 29') is damped at least in some areas by a brake (48).

8. A device according to one of the preceding Claims,
**characterised in that** the front housing end (8) of the radio telephone (1, 1', 1") lying opposite the contact unit (12, 12', 12") is grasped by a retaining element (34) in the operating position.

9. A device according to one of the preceding Claims,
**characterised in that** in the operating position the radio telephone (1, 1', 1") is acted upon on one rear side (4) by at least one level compensating element (36).

10. A device according to one of the preceding Claims,
**characterised in that** in the operating position the radio telephone (1, 1', 1") keeps an ejector (38) in a prestressed position.

11. A device according to one of the preceding Claims,
**characterised in that** the contact means (30, 30') of the counter-contact unit (29, 29') are mounted to float preferably at least in a plane situated parallel to a flattened portion (5) of the counter-contact unit (29, 29').

12. A device according to one of the preceding Claims,
**characterised in that** the spring element (40) performs a movement of the radio telephone (1, 1', 1") out of the operating position into the housing/delivery position (47) after the release of the retaining element (34).

## Revendications

1. Dispositif pour le support et la mise en contact d'un radiotéléphone (1, 1', 1'') comprenant un boîtier parallélépipédique allongé (2) avec une unité de contact (12, 12', 12") située à une extrémité du boîtier côté frontal (7) qui comporte des éléments d'établissement de contact et/ou de liaison, l'unité de contact (12, 12', 12 ") du radiotéléphone (1, 1', 1 ") coopérant avec une unité de contact opposée pivotante (29, 29') d'un support (20) pour le radiotéléphone (1, 1', 1") et le radiotéléphone (1, 1', 1") avec son unité de contact (12, 12', 12") pouvant être posé et/ou emboîté sur l'unité de contact opposée (29, 29') du support et pouvant pivoter avec celle-ci selon un angle de pivotement,
**caractérisé en ce qu'**une adaptation du support (20) à la dimension longitudinale du boîtier (L) du radiotéléphone (1, 1', 1 ") a lieu au moyen d'un déplacement longitudinal de l'unité de contact opposée (29, 29') à l'intérieur du support (20).

2. Dispositif selon la revendication 1,
**caractérisé en ce que** l'unité de contact opposée (29, 29') comporte des moyens de contact (30, 30') dans la zone desquels il est prévu un espace pour des radiotéléphones (1, 1', 1") de largeurs de boîtier (C', C") et/ou d'épaisseurs de boîtier (D1, D1', D1'') différentes.

3. Dispositif selon l'une quelconque des revendications précédentes,
**caractérisé en ce que**, dans une position de réception/émission (47) pour le radiotéléphone (1, 1', 1 "), l'unité de contact opposée (29, 29') avec un moyen de contact (30, 30') est pivotée d'environ 45° à 135° par rapport au plan principal (E) du support (20).

4. Dispositif selon l'une quelconque des revendications précédentes,
**caractérisé en ce que** le radiotéléphone (1, 1', 1 ") peut être amené de la position de réception (47) à une position de travail par l'intermédiaire d'un mouvement de rotation, suivi d'un mouvement de glissement en rotation et, pour finir, d'un mouvement de glissement en arrière dans le support (20).

5. Dispositif selon l'une quelconque des revendications précédentes,
**caractérisé en ce que** l'unité de contact opposée (29, 29') est constituée essentiellement d'un corps de base (31, 31') qui porte des moyens de contact (30, 30') orientés perpendiculairement à son axe de rotation (32, 32'),

6. Dispositif selon l'une quelconque des revendications précédentes,
**caractérisé en ce que** l'unité de contact opposée (29, 29') est maintenue par un ressort (40) dans la position de réception et d'émission (47), le ressort (40) s'opposant au mouvement de rotation et au mouvement de glissement de l'unité de contact opposée (29, 29').

7. Dispositif selon l'une quelconque des revendications précédentes,
**caractérisé en ce que** le mouvement de l'unité de contact opposée (29, 29') est amorti au moins par endroits par un frein (48).

8. Dispositif selon l'une quelconque des revendications précédentes,
**caractérisé en ce que** l'extrémité du boîtier côté frontal (8) du radiotéléphone (1, 1', 1'') située à l'opposé de l'unité de contact (12, 12', 12") est saisie par un élément de retenue (34) dans la position de travail.

9. Dispositif selon l'une quelconque des revendications précédentes,
**caractérisé en ce que** le radiotéléphone (1, 1', 1 ") dans la position de travail est chargé sur une face arrière (4) par au moins un élément de compensation de niveau (36).

10. Dispositif selon l'une quelconque des revendications précédentes,
**caractérisé en ce que** le radiotéléphone (1, 1', 1 ") dans la position de travail tient un éjecteur (38) dans une position de pré-tension.

11. Dispositif selon l'une quelconque des revendications précédentes,
**caractérisé en ce que** les moyens de contact (30, 30') de l'unité de contact opposée (29, 29') sont montés de manière flottante de préférence au moins dans un plan situé parallèlement à un méplat (5) de l'unité de contact opposée (29, 29').

12. Dispositif selon l'une quelconque des revendications précédentes,
**caractérisé en ce que** l'élément de ressort (40) provoque, après le détachement de l'élément de retenue (34), un déplacement du radiotéléphone (1, 1', 1") de la position de travail à la position de réception/émission (47).
